(19) **Europäisches Patentamt**

**European Patent Office**

**Office européen des brevets**

(11) **EP 1 623 998 A1**

(12) **EUROPEAN PATENT APPLICATION**
published in accordance with Art. 158(3) EPC

(43) Date of publication:
**08.02.2006 Bulletin 2006/06**

(51) Int Cl.:
**C08F 2/20** (1974.07)    **C08F 2/38** (1974.07)
**C08F 8/00** (1974.07)

(21) Application number: **04732476.9**

(22) Date of filing: **12.05.2004**

(86) International application number:
**PCT/JP2004/006667**

(87) International publication number:
**WO 2004/101628 (25.11.2004 Gazette 2004/48)**

(84) Designated Contracting States:
**BE DE FR GB IT**

(30) Priority: **13.05.2003  JP  2003134391**

(71) Applicant: **SUMITOMO SEIKA CHEMICALS CO., LTD.**
**Kako-gun, Hyogo 675-0145 (JP)**

(72) Inventors:
• **YOSHINO, Kazuhiro**
  **Fukuoka 818-0031 (JP)**

• **NAWATA, Yasuhiro,**
  **Functional Polymers Resear. Lab.**
  **Shikama-ku,**
  **Himeji-shi,**
  **Hyogo 672-8076 (JP)**

(74) Representative: **Vossius & Partner**
  **Siebertstrasse 4**
  **81675 München (DE)**

(54) **METHOD FOR PRODUCING WATER-ABSORBING RESIN**

(57)    A process for preparing a water-absorbent resin comprising carrying out a reverse phase suspension polymerization in multi-steps of at least two steps when the water-absorbent resin is prepared by subjecting a water-soluble ethylenically unsaturated monomer to the reverse phase suspension polymerization in the presence of a crosslinking agent, the process for preparing a water-absorbent resin being **characterized by** adding a water-soluble chain transfer agent in an amount of 0.000012 to 0.01 mole per 1 mole of the water-soluble ethylenically unsaturated monomer used in a polymerization reaction to at least one step in the second and subsequent steps of the multi-steps, to carry out the polymerization reaction. The water-absorbent resin can be suitably used in hygienic materials such as disposable diaper and sanitary napkin.

## FIG. 1

**Description**

<u>TECHNICAL FIELD</u>

The present invention relates to a process for preparing a water-absorbent resin. More specifically, the present invention relates to a process for preparing a water-absorbent resin which can be suitably used in hygienic materials such as disposable diaper and sanitary napkin.

<u>BACKGROUND ART</u>

Conventionally, water-absorbent resins have been widely used in hygienic materials such as disposable diaper and sanitary napkin, and industrial materials such as water blocking materials for cables.

As water-absorbent resins, there have been known, for example, hydrolysates of starch-acrylonitrile graftcopolymers, neutralized products of starch-acrylate graftpolymers, saponified products of vinyl acetate-acrylic ester copolymers, partially neutralized products of polyacrylic acid, and the like.

While these water-absorbent resins generally have a large water-retaining capacity, the water-absorbent resins have unsatisfactory water absorbency under pressure. Therefore, as in disposable diapers for adults, for which needs have been increasing in recent years, when these water-absorbent resins are used in a water-absorbent article to which a load is applied upon use, the water-absorbent resins have poor water absorbency under pressure, so that the water-absorbent article cannot exhibit satisfactory absorbency.

As a process for preparing a water-absorbent resin which is excellent in water-retaining property and water absorbency under pressure, there has been known, for example, a process for preparing a water-absorbent resin comprising polymerizing a water-soluble ethylenically unsaturated monomer in the presence of specified amounts of a crosslinking agent and a water-soluble chain transfer agent based on the water-soluble ethylenically unsaturated monomer, as disclosed in Japanese Patent Laid-Open No. Hei 2-255804 and Japanese Patent Laid-Open No. 2002-284805.

However, the water-absorbent resin obtained by the process for preparing a water-absorbent resin needs a further improvement for actual use even though the water-absorbent resin has relatively high water-retaining property and water absorbency under pressure. Therefore, a process for preparing a water-absorbent resin which is more excellent in water-retaining property and water absorbency under pressure has been desired.

**DISCLOSURE OF INVENTION**

The present invention has been accomplished in view of the conventional techniques mentioned above, and an object of the present invention is to provide a process for preparing a water-absorbent resin which is excellent in water-retaining property and water absorbency under pressure, and can be suitably used in hygienic materials or the like.

Specifically, the present invention relates to a process for preparing a water-absorbent resin comprising carrying out a reverse phase suspension polymerization in multi-steps of at least two steps when the water-absorbent resin is prepared by subjecting a water-soluble ethylenically unsaturated monomer to the reverse phase suspension polymerization in the presence of a crosslinking agent, the process for preparing a water-absorbent resin being characterized by adding a water-soluble chain transfer agent in an amount of 0.000012 to 0.01 mole per 1 mole of the water-soluble ethylenically unsaturated monomer used in a polymerization reaction to at least one step in the second and subsequent steps of the multi-steps, to carry out the polymerization reaction.

**BRIEF DESCRIPTION OF THE DRAWINGS**

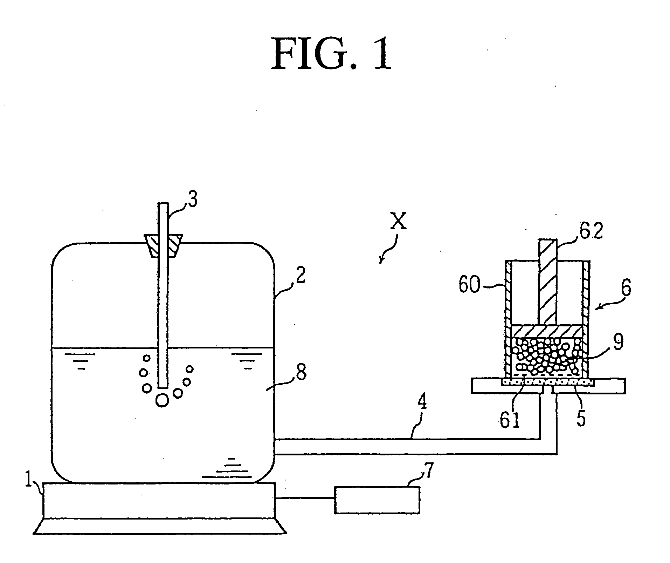

Figure 1 is a schematic explanatory view of a measuring apparatus X used in the determination of the amount of water absorption under pressure.

**BEST MODE FOR CARRYING OUT THE INVENTION**

In the process of the present invention, first, a first-step reverse phase suspension polymerization in a water-in-oil system is carried out by mixing together an aqueous solution of a water-soluble ethylenically unsaturated monomer, a surfactant and/or a polymeric protective colloid, a water-soluble radical polymerization initiator, a crosslinking agent, and a hydrocarbon-based solvent, and heating the mixture with stirring.

The water-soluble ethylenically unsaturated monomer usable in the present invention includes, for example, (meth)acrylic acid ["(meth)acryl-" means "acryl-" or "methacryl-;" hereinafter referred to the same], 2-(meth)acrylamide-2-methylpropanesulfonic acid or an alkali metal salt thereof; nonionic monomers such as (meth)acrylamide, N,N-dimethylacrylamide, 2-hydroxyethyl (meth)acrylate, and N-methylol (meth)acrylamide; amino group-containing unsaturated monomers such as diethylaminoethyl (meth)acrylate and diethylaminopropyl (meth)acrylate or a quaternary salt thereof; and the like. These can be used alone or in admixture of at least two kinds. The alkali metal in the alkali metal salts includes lithium, sodium, potassium, and the like.

Among the above-mentioned water-soluble ethylenically unsaturated monomers, preferred ones include acrylic acid or an alkali metal salt thereof, methacrylic acid or an alkali metal salt thereof, acrylamide, methacrylamide and N,N-dimethylacrylamide, from the viewpoint of being industrially easily available.

The above-mentioned water-soluble ethylenically unsaturated monomer can be usually used in the form of an aqueous solution. It is preferable that the concentration of the water-soluble ethylenically unsaturated monomers in the aqueous solution of the water-soluble ethylenically unsaturated monomers is from 25% by weight to a saturated concentration.

In the aqueous solution of the above-mentioned water-soluble ethylenically unsaturated monomer, when the water-soluble ethylene monomer to be used has an acid group, the acid group may be neutralized with an alkali metal. It is preferable that the degree of neutralization by the above-mentioned alkali metal is from 10 to 100% by mole of the acid group of the water-soluble ethylenically unsaturated monomer before the neutralization, from the viewpoint of increasing osmotic pressure and water absorption rate of the resulting water-absorbent resin, and not causing any disadvantages in safety and the like due to the presence of an excess alkali metal. The above-mentioned alkali metal includes lithium, sodium, potassium, and the like. Among them, sodium and potassium are preferable.

The surfactant usable in the present invention includes, for example, nonionic surfactants such as sorbitan fatty acid esters, polyglycerol fatty acid esters, sucrose fatty acid esters, sorbitol fatty acid esters, polyoxyethylene alkylphenyl ethers and hexaglycerol monobehenate; anionic surfactants such as fatty acid salts, alkylbenzenesulfonic acid salts, alkyl methyl tauric acid salts, polyoxyethylene alkylphenyl ether sulfate esters and polyoxyethylene alkyl ether sulfonic acid salts; and the like. Among them, sorbitan fatty acid esters, polyglycerol fatty acid esters, and sucrose fatty acid esters are preferable. These surfactants can be used alone or in admixture of at least two kinds.

The polymeric protective colloid usable in the present invention includes, for example, ethyl cellulose, ethyl hydroxyethyl cellulose, polyethylene oxide, maleic anhydride-modified polyethylene, maleic anhydride-modified polybutadiene, maleic anhydride-modified EPDM (ethylene/propylene/diene terpolymer), and the like. These polymeric protective colloids can be used alone or in combination of at least two kinds.

The amount of the surfactant and/or the polymeric protective colloid mentioned above is preferably 0.1 to 5 parts by weight, and more preferably 0.2 to 3 parts by weight based on 100 parts by weight of the aqueous solution of the water-soluble ethylenically unsaturated monomer.

The above-mentioned water-soluble radical polymerization initiator includes, for example, persulfates such as potassium persulfate, ammonium persulfate and sodium persulfate; peroxides such as hydrogen peroxide; azo compounds such as 2,2'-azobis(2-amidinopropane)dihydrochloride; and the like. The water-soluble radical polymerization initiator can be used as a redox-system polymerization initiator together with a sulfite or the like. Among them, potassium persulfate, ammonium persulfate, sodium persulfate and 2,2'-azobis(2-amidinopropane)dihydrochloride are preferable, from the viewpoint of being easily available and excellent in storage stability. The above-mentioned water-soluble radical polymerization initiators can be used alone or in admixture of at least two kinds.

It is preferable that the amount of the water-soluble radical polymerization initiator mentioned above is usually 0.00005 to 0.01 mole per 1 mole of the water-soluble ethylenically unsaturated monomer, from the viewpoint of shortening the time period for the polymerization reaction and preventing abrupt polymerization reaction.

The above-mentioned hydrocarbon-based solvent includes, for example, aliphatic hydrocarbons such as n-hexane, n-heptane and ligroin; alicyclic hydrocarbons such as cyclopentane, methylcyclopentane, cyclohexane and methylcyclohexane; aromatic hydrocarbons such as benzene, toluene and xylene; and the like. Among them, n-hexane, n-heptane and cyclohexane are preferable, from the viewpoint of being industrially easily available, stable in quality and inexpensive.

Usually, the amount of the hydrocarbon-based solvent mentioned above is preferably 50 to 600 parts by weight, and more preferably 100 to 550 parts by weight based on 100 parts by weight of the water-soluble ethylenically unsaturated monomer, from the viewpoint of removing heat of polymerization and being likely to easily control the polymerization temperature.

The crosslinking agent usable in the present invention includes, for example, di- or tri(meth)acrylate esters of polyols such as ethylene glycol, propylene glycol, trimethylolpropane, glycerol, polyoxyethylene glycol, polyoxypropylene glycol and polyglycerol; unsaturated polyesters obtained by reacting the above-mentioned polyol with an unsaturated acid such as maleic acid or fumaric acid; bisacrylamides such as N,N'-methylenebisacrylamide; di-or tri(meth)acrylate esters obtained by reacting a polyepoxide with (meth)acrylic acid; carbamyl ester of di(meth)acrylic acid obtained by reacting a polyisocyanate such as tolylene diisocyanate or hexamethylene diisocyanate with hydroxyethyl (meth)acrylate; compounds each having at least two polymerizable unsaturated groups, such as allylated starch, allylated cellulose, diallyl phthalate, N,N',N''-triallyl isocyanurate and divinylbenzene; diglycidyl ether compounds such as (poly)ethylene glycol diglycidyl ether ["(poly)" means both cases where the prefix "poly" is included and where the prefix is not included; hereinafter referred to the same], (poly)propylene glycol diglycidyl ether and (poly)glycerol diglycidyl ether; haloepoxy compounds such as epichlorohydrin, epibromohydrin and $\alpha$-methylepichlorohydrin; and compounds each having at least two reactive functional groups, such as isocyanate compounds such as 2,4-tolylene diisocyanate and hexamethylene diisocyanate.

The amount of the above-mentioned crosslinking agent is preferably 0.000001 to 0.00005 mole per 1 mole of the above-mentioned water-soluble ethylenically unsaturated monomer in order to suppress the water solubility of the resulting polymer by an appropriate crosslinking, thereby showing a satisfactory water absorbency.

The reaction temperature of the above-mentioned polymerization reaction differs depending upon the radical polymerization initiator used. The reaction temperature is preferably 20° to 110°C and more preferably 40° to 90°C, from the viewpoint of rapidly progressing the reaction, shortening the polymerization time, being economically advantageous, easily removing heat of polymerization, and smoothly carrying out the reaction. The reaction time is usually 0.1 to 4 hours.

Thus, the first-step reverse phase suspension polymerization is carried out. Next, the resulting reaction mixture is subjected to a second- or subsequent-step reverse phase suspension polymerization. In the present invention, the reverse phase suspension polymerization is carried out in plural steps of at least two steps, and it is preferable that the number of steps is 2 or 3 steps from the viewpoint of increasing productivity.

The greatest feature of the present invention resides in that a water-soluble chain transfer agent is added to at least one of the stages of the reverse phase suspension polymerization in the second or subsequent step. The process for carrying out a reverse phase suspension polymerization comprising adding a water-soluble chain transfer agent to the reaction mixture is not particularly limited. One example of the process for carrying out a second- or subsequent-step reverse phase suspension polymerization includes a process comprising adding an aqueous solution of a water-soluble ethylenically unsaturated monomer to the solution of the first-step reaction with mixing, and carrying out a second- or subsequent-step reverse phase suspension polymerization in the same manner as in the first step.

The water-soluble chain transfer agent may be added in a given amount to the aqueous solution of a water-soluble ethylenically unsaturated monomer which is added to the solution in the second- or subsequent-step reaction, or can be added to the reaction solution cooled to a temperature of from 10° to 30°C after the termination of the first-step polymerization reaction.

The water-soluble chain transfer agent usable in the present invention includes, for example, a thiol, a thiolic acid, a secondary alcohol, a hypophosphite, and the like. These can be used alone or in admixture of at least two kinds.

Specific examples of the water-soluble chain transfer agent include ethanethiol, propanethiol, dodecanethiol, thioglycolic acid, thiomalic acid, dimethyldithiocarbamic acid or a salt thereof, diethyldithiocarbamic acid or a salt thereof, L-cysteine or a salt thereof, 3-carboxypropanethiol, isopropanol, sodium hypophosphite, and the like. These can be used alone or in admixture of at least two kinds. Among the water-soluble chain transfer agents, sodium hypophosphite, L-cysteine hydrochloride, thiomalic acid and isopropanol are preferable, from the viewpoint of high efficiency of addition and economical advantage.

The amount of the above-mentioned water-soluble chain transfer agent in the step of carrying out the polymerization reaction by adding the water-soluble chain transfer agent to the reaction mixture in the polymerization reaction of the second- or subsequent-step is 0.000012 to 0.01 mol, preferably 0.000015 to 0.005 mol, and more preferably 0.00002 to 0.001 mole per 1 mole of the water-soluble ethylenically unsaturated monomer subjected to the reaction. When the amount of the chain transfer agent is less then 0.000012 mol, the effect of adding the water-soluble chain transfer agent cannot be sufficiently obtained, and when the amount exceeds 0.01 mol, the amount of water absorption lowers under pressure.

It is preferable that the water-absorbent resin thus obtained is subjected to post-crosslinking by adding a post-crosslinking agent having at least two functional groups having reactivity with carboxyl groups thereto.

The post-crosslinking agent may be any one having reactivity with a carboxyl group in the water-absorbent resin. For example, the same ones as the above-mentioned crosslinking agent can be used.

The amount of the post-crosslinking agent differs depending upon the water absorbency of the water-absorbent resin before crosslinking and the kinds of the crosslinking agent used. Usually, it is desired that the amount of the post-crosslinking agent is 0.005 to 5 parts by weight, and preferably 0.01 to 1 part by weight based on 100 parts by weight of the total amount of the water-soluble ethylenically unsaturated monomer subjected to the polymerization. When the amount of the post-crosslinking agent used is less than 0.005 parts by weight, the water-absorbent resin is less likely to achieve a satisfactory crosslink density, and when the amount exceeds 5 parts by weight, the water absorption ability is likely to be lowered.

The timing for adding the post-crosslinking agent is not particularly limited, as long as the post-crosslinking agent is added after the termination of the polymerization reaction of the monomer.

It is preferable that the water-absorbent resin and the post-crosslinking agent are mixed together in the presence of water. The amount of water used in the mixing differs depending upon the kinds, particle sizes, and water content of the water-absorbent resin. Usually, it is desired that the amount of water is from 1 to 300 parts by weight, and preferably from 5 to 100 parts by weight, based on 100 parts by weight of the total amount of the water-soluble ethylenically unsaturated monomer used for polymerization. When the amount of water is less than 1 part by weight, the crosslinking reaction is less likely to progress, and when the amount exceeds 300 parts by weight, the water absorption ability is likely to be lowered. The amount of water in the present invention means the total amount of water remaining in the reaction system and water used as occasion demands when the post-crosslinking agent is added.

After the termination of the post-crosslinking, water and the hydrocarbon-based solvent are distilled off from the water-absorbent resin, whereby a dry product of the water-absorbent resin can be obtained.

EXAMPLES

The present invention will be explained hereinbelow by means of examples, without intending to limit the present invention only to these examples.

Example 1

The amount 340 g of n-heptane and 0.92 g of a sucrose fatty acid ester (manufactured by MITSUBISHI CHEMICAL CORPORATION under the trade name of S-370) having an HLB of 3.0 were added to a 1000 mL-five-necked cylindrical round bottomed flask equipped with a stirrer, a reflux condenser, a dropping funnel, a thermometer and a nitrogen gas inlet tube. The mixture was dispersed in the flask, and the temperature of the dispersion was raised to dissolve the mixture, and thereafter the resulting solution was cooled to 55°C.

Separately from the above, 92 g (1.02 mol) of an 80% by weight aqueous solution of acrylic acid was added to a 500 mL-Erlenmeyer flask. Thereto was added dropwise 102.2 g (0.76 mol) of a 30% by weight aqueous sodium hydroxide with cooling from external, to neutralize 75% by mole of acrylic acid. Further, 50.2 g of water, 0.11 g (0.41 mmol) of a water-soluble radical polymerization initiator potassium persulfate, and 8.3 mg (0.047 mmol) of a crosslinking agent ethylene glycol diglycidyl ether were added thereto, to give an aqueous monomer solution for a first-step polymerization.

The entire amount of this aqueous monomer solution for a first-step polymerization was added to the above-mentioned five-necked cylindrical round bottomed flask with stirring, and the mixture was dispersed. After the internal of the system was sufficiently replaced with nitrogen gas, the temperature of the mixture was raised, and the polymerization reaction was carried out for 1 hour with keeping its bath temperature at 70°C. Thereafter, the polymerization slurry was cooled to room temperature.

The amount 119.1 g (1.32 mol) of an 80% by weight aqueous solution of acrylic acid was added to a separate 500 mL-Erlenmeyer flask. The amount 132.2 g (0.99 mol) of a 30% by weight aqueous sodium hydroxide solution was added dropwise thereto with cooling, to neutralize 75% by mole of acrylic acid. Further, 27.4 g of water, 0.14 g (0.52 mmol) of potassium persulfate and 18 mg (0.17 mmol) of sodium hypophosphite monohydrate were added thereto, to give an aqueous monomer solution for a second-step polymerization. The aqueous monomer solution was cooled in an ice water bath.

The entire amount of this aqueous monomer solution for a second-step polymerization was added to the above-mentioned polymerization slurry. After the internal of the system was again sufficiently replaced with nitrogen gas, the temperature of the mixture was raised, and the second-step polymerization reaction was carried out for 2 hours with keeping its bath temperature at 70°C. After the termination of the polymerization, the polymerization slurry was heated in an oil bath at 120°C, and the heated mixture was subjected to azeotropic distillation to distill off 260 g of water alone to external of the system. The amount of water remaining in the reaction system at this point was 52 g.

The amount 8.15 g of a 2% by weight aqueous solution of ethylene glycol diglycidyl ether was added to the resulting gelated product with mixing. Water and n-heptane were further removed from the mixture by distillation, and the residue was dried, to give 213.5 g of a water-absorbent resin.

Example 2

The same procedures as in Example 1 were carried out except that the amount of sodium hypophosphite monohydrate in Example 1 was changed to 30 mg (0.28 mmol), to give 222.5 g of a water-absorbent resin.

Example 3

The same procedures as in Example 1 were carried out except that the amount of sodium hypophosphite monohydrate in Example 1 was changed to 120 mg (1.13 mmol), to give 217.5 g of a water-absorbent resin.

Example 4

The same procedures as in Example 1 were carried out except that 98.3 mg (0.56 mmol) of L-cysteine hydrochloride monohydrate was used in place of sodium hypophosphite monohydrate in Example 1, to give 216.1 g of a water-absorbent resin.

Example 5

The same procedures as in Example 1 were carried out except that 26.2 mg (0.17 mmol) of thiomalic acid was used in place of sodium hypophosphite monohydrate in Example 1, to give 216.9 g of a water-absorbent resin.

Example 6

The same procedures as in Example 1 were carried out except that 0.72 mg (11.98 mmol) of isopropanol was used in place of sodium hypophosphite monohydrate in Example 1, to give 218.1 g of a water-absorbent resin.

Comparative Example 1

The same procedures as in Example 1 were carried out except that the amount of sodium hypophosphite monohydrate in Example 1 was changed to 1.5 mg (0.014 mmol), to give 218.9 g of a water-absorbent resin.

Comparative Example 2

The same procedures as in Example 1 were carried out except that the amount of sodium hypophosphite monohydrate in Example 1 was changed to 2700 mg (25.5 mmol), to give 215.9 g of a water-absorbent resin.

The water-absorbent resin obtained in each Example and each Comparative Example mentioned above was evaluated in accordance with the following methods. The results are shown in Table 1.

(1) Water-Retaining Capacity of Physiological Saline

Two grams of a water-absorbent resin was weighed in a cotton bag (Cottonbroad No. 60, width 100 mm X length 200 mm), and placed in a 500 mL-beaker. Physiological saline was poured into the cotton bag in an amount of 500 g at a time, and the saline was dispersed so as not to generate a lump of the water-absorbent resin. The upper part of the cotton bag was tied up with a rubber band, and the cotton bag was allowed to stand for 1 hour, to sufficiently swell the water-absorbent resin. The cotton bag was spin-dried for 1 minute with a spin dryer (manufactured by Kokusan Enshinki Co., Ltd., product number: H-122) set to have a centrifugal force of 167G, and the weight (Wa) of the cotton bag containing swelled gels after the dehydration was determined. The same procedures were carried out without adding a water-absorbent resin, and the empty weight (Wb) of the cotton bag upon wetting was determined. The water-retaining capacity was calculated from the following formula:

$$[\text{Water-Retaining Capacity}]\ (g/g)$$

$$= [Wa - Wb]\ (g)/\ [\text{Weight of Water-Absorbent Resin}]\ (g)$$

(2) Amount of Water Absorption under Pressure .

The amount of water absorption of a water-absorbent resin under the pressure of 2.07 kPa was determined using a measuring apparatus X shown in Figure 1.

The measuring apparatus X shown in Figure 1 comprises a balance 1, a bottle 2 placed on the balance 1, an air aspiration tube 3, a lead pipe 4, a glass filter 5, and a measuring section 6 placed on the glass filter 5.

The balance 1 is connected to a computer 7 so that change in weight can be recorded in the units of seconds or minutes. The bottle 2 holds physiological saline 8 in the internal thereof, and the air aspiration tube 3 is inserted in an opening on its top, and the lead pipe 4 is attached to the body section. The lower end of the air aspiration tube 3 is soaked in the physiological saline 8. The glass filter 5 has a diameter of 25 mm. As the glass filter 5, Glass Filter No.1 of Sogo Rikagaku Glass Seisakusho (pore diameter: 100 to 160 $\mu$m) was used.

The bottle 2 and the glass filter 5 are communicated with each other via the lead pipe 4. In addition, the glass filter 5 is fixed to a position slightly higher than the lower end of the air aspiration tube 3. The measuring section 6 has a cylinder 60, a nylon mesh 61 adhered to the bottom part of the cylinder 60, and a weight 62 having a diameter of 19 mm and a weight of 59.8 g. The cylinder 60 has an inner diameter of 20 mm. The nylon mesh 61 is formed to have a size of 200 mesh screen (size of opening: 75 $\mu$m), and a given amount of a water-absorbent resin 9 is evenly spread over the nylon mesh 61. The weight 62 is placed on the water-absorbent resin 9, so that a 2.07 kPa load can be applied to the water-absorbent resin 9.

In the measuring apparatus X having the constitution as described above, first, the bottle 2 is charged with physiological saline in a given amount, and the air aspiration tube 3 is placed in the bottle 2 to get ready for the determination. Next, 0.10 g of the water-absorbent resin 9 is evenly spread over the nylon mesh 61 in the cylinder 60, and the weight 62 is placed on the water-absorbent resin 9. The measuring section 6 is placed on the glass filter 5 so that its central section is in alignment with the central section of the glass filter 5.

On the other hand, the computer 7 connected to the electronic balance 1 is booted, and the weight reduction of the physiological saline 8 in the bottle 2, i.e., the weight of the physiological saline 8 absorbed by the water-absorbent resin 9, Wc (g), is continuously recorded on the computer 7 from the time when the water-absorbent resin 9 starts absorbing water, in units of minutes and preferably in units of seconds on the basis of the value obtained from the balance 1. The amount of water absorption of the water-absorbent resin 9 under pressure after 60 minutes passed from the beginning of the water absorption is obtained by dividing the weight Wc (g) after 60 minutes passed by the weight of the water-absorbent resin 9 (0.10 g).

Table 1

| Ex. No. or Comp. Ex. No. | Water-Retaining Capacity of Physiological Saline | Amount of Water Absorption Under Pressure |
|---|---|---|
| | (g/g) | (g/g) |
| Ex. 1 | 50 | 29 |
| Ex. 2 | 52 | 30 |
| Ex. 3 | 46 | 26 |
| Ex. 4 | 44 | 31 |
| Ex. 5 | 45 | 27 |
| Ex. 6 | 44 | 26 |
| Comp. Ex. 1 | 46 | 16 |
| Comp. Ex. 2 | 44 | 18 |

It can be seen from the results shown in Table 1 that since all of the water-absorbent resins obtained in Examples 1 to 6 have a large water-retaining capacity of physiological saline and a large amount of water absorption under pressure, the water-absorbent resins are excellent in water-retaining property and water absorbency under pressure.

Therefore, according to the present invention, there can be prepared a water-absorbent resin which is excellent in water-retaining property and water absorbency under pressure, and can be suitably used in hygienic materials and the like.

### INDUSTRIAL APPLICABILITY

The water-absorbent resin obtained by the process of the present invention can be suitably used in hygienic materials such as disposable diaper and sanitary napkin.

### Claims

1.  A process for preparing a water-absorbent resin comprising carrying out a reverse phase suspension polymerization in multi-steps of at least two steps when the water-absorbent resin is prepared by subjecting a water-soluble ethylenically unsaturated monomer to the reverse phase suspension polymerization in the presence of a crosslinking agent, said process for preparing a water-absorbent resin being **characterized by** adding a water-soluble chain transfer agent in an amount of 0.000012 to 0.01 mole per 1 mole of the water-soluble ethylenically unsaturated monomer used in a polymerization reaction to at least one step in the second and subsequent steps of the multi-steps, to carry out the polymerization reaction.

2.  The process according to claim 1, wherein the water-soluble chain transfer agent is at least one member selected from the group consisting of a thiol, a thiolic acid, a secondary alcohol and a salt of hypophosphorous acid.

3. The process according to claim 1, wherein the water-soluble ethylenically unsaturated monomer is at least one member selected from the group consisting of acrylic acid and an alkali metal salt thereof, methacrylic acid and an alkali metal salt thereof, acrylamide, methacrylamide, and N,N-dimethacrylamide.

4. The process according to claim 1, wherein an aqueous solution of the water-soluble ethylenically unsaturated monomer, a surfactant and/or a polymeric protective colloid, a water-soluble radical polymerization initiator, a crosslinking agent, and a hydrocarbon-based solvent are mixed together, and the resulting mixture is heated with stirring to carry out a first-step reverse phase suspension polymerization in a water-in-oil system.

5. The process according to claim 4, wherein the surfactant is at least one member selected from the group consisting of a sorbitan fatty acid ester, a polyglycerol fatty acid ester and a sucrose fatty acid ester.

6. The process according to claim 4, wherein the water-soluble radical polymerization initiator is at least one member selected from the group consisting of potassium persulfate, ammonium persulfate, sodium persulfate and 2,2'-azo-bis(2-amidinopropane) dihydrochloride.

7. The process according to claim 1, wherein the water-soluble chain transfer agent is added to an aqueous solution of a water-soluble ethylenically unsaturated monomer, and thereafter the resulting solution is added to a polymerization reaction solution obtained in a first or subsequent step reverse phase suspension polymerization reaction.

8. The process according to claim 1, wherein a crosslinking agent is added to a reaction mixture after termination of the polymerization reaction of the water-soluble ethylenically unsaturated monomer.

# FIG. 1

<table>
<tr><td colspan="2" align="center">**INTERNATIONAL SEARCH REPORT**</td><td>International application No.<br>PCT/JP2004/006667</td></tr>
</table>

| | |
|---|---|
| A. CLASSIFICATION OF SUBJECT MATTER<br>Int.Cl⁷ C08F2/20, 2/38, 8/00 | |

According to International Patent Classification (IPC) or to both national classification and IPC

**B. FIELDS SEARCHED**

Minimum documentation searched (classification system followed by classification symbols)
$$Int.Cl^7 \quad C08F2/00-2/60, \ 8/00$$

Documentation searched other than minimum documentation to the extent that such documents are included in the fields searched

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | JP 9-12613 A (Mitsubishi Chemical Corp.),<br>14 January, 1997 (14.01.97),<br>Claims; examples 1 to 15<br>& EP 751159 B          & US 5652309 A<br>& DE 69610039 T2          & CN 1146997 A | 1-8 |
| X | JP 11-130968 A (Mitsubishi Chemical Corp.),<br>18 May, 1999 (18.05.99),<br>Claims; examples 1 to 9<br>(Family: none) | 1-8 |
| A | JP 9-143210 A (Sumitomo Seika Chemicals Co.,<br>Ltd.),<br>03 June, 1997 (03.06.97),<br>Claims<br>(Family: none) | 1-8 |

| ☒ Further documents are listed in the continuation of Box C. | ☐ See patent family annex. |
|---|---|

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>23 July, 2004 (23.07.04) | Date of mailing of the international search report<br>10 August, 2004 (10.08.04) |
|---|---|
| Name and mailing address of the ISA/<br>Japanese Patent Office | Authorized officer |
| Facsimile No. | Telephone No. |

Form PCT/ISA/210 (second sheet) (January 2004)

INTERNATIONAL SEARCH REPORT

| International application No. |
| --- |
| PCT/JP2004/006667 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 9-124710 A (Nippon Shokubai Co., Ltd.), 13 May, 1997 (13.05.97), Claims (Family: none) | 1-8 |
| A | JP 7-116511 A (Eruf Atkem S.A.), 09 May, 1995 (09.05.95), Claims & EP 644211 B & FR 2710342 A & US 5563218 A & TW 300229 A & CN 1102832 A & DE 69405839 T2 & SG 52726 A | 1-8 |
| A | JP 5-17509 A (Mitsubishi Petrochemical Co., Ltd.), 26 January, 1993 (26.01.93), Claims & EP 522570 B & US 5548047 A & TW 242152 A & DE 69219223 T2 & KR 204464 B | 1-8 |
| A | JP 3-227301 A (Sumitomo Seika Chemicals Co., Ltd.), 08 October, 1991 (08.10.91), Claims & EP 441507 B & US 5180798 A & DE 69118224 T2 & CA 2034293 A & ES 2087967 T2 &CN 1053796 A & TW 228528 A | 1-8 |
| A | JP 3-179008 A (Nippon Shokubai Kagaku Kogyo Co., Ltd.), 05 August, 1991 (05.08.91), Claims (Family: none) | 1-8 |

Form PCT/ISA/210 (continuation of second sheet) (January 2004)